# EUROPÄISCHE PATENTSCHRIFT

(11) **EP 1 791 623 B1**
(45) Veröffentlichungstag und Bekanntmachung des Hinweises auf die Patenterteilung: **05.05.2010**
(21) Anmeldenummer: 05783047.3
(22) Anmeldetag: 01.09.2005
(51) Int. Cl.: B01D 69/12, B01D 69/08

(54) **VERFAHREN ZUR HERSTELLUNG VON HOHLFADENMEMBRANEN**
METHOD FOR PRODUCING HOLLOW FIBER MEMBRANES
PROCÉDÉ POUR RÉALISER DES MEMBRANES À FIBRES CREUSES

(30) Priorität: 20.09.2004 DE 102004045848
(43) Veröffentlichungstag der Anmeldung: 06.06.2007
(73) Patentinhaber: GKSS-Forschungszentrum Geesthacht GmbH, 21502 Geesthacht (DE)
(72) Erfinder: PEINEMANN, Klaus-Viktor, 21502 Geesthacht (DE); DE OLIVERA MASCARENHAS, Ricardo, Bosque 13026-001 Campinas-SP (BR); VERISSIMO, Sonia, P-2005-403 Carvalhal Benfeito (PT); BLICKE, Carsten, 52146 Würselen (DE)
(74) Vertreter: Seemann, Ralph
(86) Internationale Anmeldenummer: PCT/EP2005/009404
(87) Internationale Veröffentlichungsnummer: WO 2006/032349

(56) Entgegenhaltungen:
- GB-A- 2 075 416
- US-A- 4 772 391
- US-A- 4 980 061
- US-A- 5 783 079
- US-A1- 2004 084 365
- VERISSIMO ET AL: "Thin-film composite hollow fiber membranes: An optimized manufacturing method" JOURNAL OF MEMBRANE SCIENCE, ELSEVIER SCIENTIFIC PUBL.COMPANY. AMSTERDAM, NL, Bd. 264, Nr. 1-2, 1. November 2005 (2005-11-01), Seiten 48-55, XP005095835 ISSN: 0376-7388

## Beschreibung

Die Erfindung betrifft ein Verfahren zur Herstellung von Hohlfadenmembranen mit innenliegender Trennschicht, wobei die Trennschicht nach der Methode der Phasengrenzflächen-Polymerisation erzeugt wird.

Die Verwendung von Flach- oder Hohlfadenmembranen für die verschiedensten Trennzwecke zur Trennung flüssiger und gasförmiger Medien ist der Fachwelt allgemein bekannt, wobei derartige Membranen in den vielfältigsten Einsatzgebieten, bspw. zur Benzindampfrückgewinnung, zur Gewinnung von Edelgasen aus Erdgasgemischen, zur Meerwasserentsalzung und auch im Bereich der Brauch- bzw. Trinkwasserrückgewinnung aus Abwässern und dergleichen, eingesetzt werden. Die vorangehend aufgeführte Aufzählung der Anwendungsgebiete von Membranen ist nicht annähernd vollständig und soll hier nur andeutungsweise auf das breite Anwendungsgebiet der Membranen hinweisen.

Das Aufbringen bzw. Ausbilden der eigentlichen trennaktiven Schicht bei Membranen kann auf die unterschiedlichste Weise geschehen und ist regelmäßig mit der mit der Membran durchzuführenden Stofftrennmethode korreliert. So werden bspw. Membranen, die nach dem Prinzip der Umkehrosmose oder Nanofiltration arbeiten bzw. betrieben werden, mit einer trennaktiven Schicht versehen, die vielfach nach dem Verfahren der sogenannten Phasengrenzflächen-Polymerisation ausgebildet werden. Dazu wird eine Membran, die zunächst nach Ausbildung des Membrankörpers noch keine Trenneigenschaften aufweist, mit einer verdünnten wässrigen Lösung eines Amins getränkt. Nachfolgend wird die überschüssige Lösung von der Oberfläche des Membrankörpers entfernt und nachfolgend wird der Membrankörper mit einer verdünnten Lösung eines Säurechlorides in einer Kohlenwasserstoffatmosphäre bzw.
-umgebung überschichtet. An der sich ausbildenden Grenzfläche des Membrankörpers bildet sich eine dünne Polyamidschicht, die die eigentliche Membran darstellt.

Ein Problem bei dieser Art der Herstellung einer Membran sind kleine Tröpfchen der Aminlösung, die auf der Oberfläche der eigentlichen, sich ausgebildet habenden Membran verbleiben und zu Fehlstellen in der Polyamidschicht führen. Im Falle der Herstellung von Flachmembranen wird dieses Problem einfach durch ein mechanisches Entfernen der Tröpfchen gelöst, bspw. mit Hilfe einer über die eigentliche Membran geführten Gummirolle.

Es versteht sich von selbst, dass Hohlfadenmembranen, die ihre eigentliche Trennschicht an der Innenoberfläche aufweisen sollen, mittels der bei Flachmembranen möglichen bekannten Methode der Entfernung kleiner Tröpfchen nicht von den Tröpfchen befreit werden können, da die Hohlfäden in der Regel einen Durchmesser von < 1 mm aufweisen.

Die Folge ist, dass bisher keine fehlstellenfreien, innen beschichteten Hohlfadenmembranen nach dem Prinzip der Phasengrenzflächen-Polymerisation hergestellt werden konnten.

Aus der US-A-4 772 391 ist zwar die Ausbildung einer Innenbeschichtung, die die trennaktive Schicht bildet, für die Anwendung der Hohlfadenmembranen nach der Trennmethode der Umkehrosmose bekannt, die aber, wie sich gezeigt hat, nur unzureichende Trennergebnisse liefert. Bei dem bekannten Verfahren wird eine Aminlösung in das Innere des Hohlfadenkörpers eingesaugt und nach kurzer Verweilzeit wird die Aminlösung abgelassen und der gleiche Vorgang wird mit einer Säurechloridlösung wiederholt. Ggf. wird nach dem Ablassen der wässrigen Lösung mit einem Luftstrom nachfolgend gespült. Es hat sich gezeigt, dass durch bloßes Ablassen der wässrigen Lösung nicht gewährleistet ist, dass sich keine Tröpfchen mehr im Innenraum auf der sich dort ausgebildet habenden Membranoberfläche befinden, wobei diese auch durch kurzes Spülen mit einem Gas, bspw. Luft oder Stickstoff, nicht entfernt werden können. Wird zudem zu lange gespült, trocknet die trennaktive Schicht der Hohlfadenmembran aus, was wenigstens zu schlechten Trennergebnissen, in der Regel sogar zu einem Unbrauchbarwerden der so ausgebildeten Membran führt.

Aus US-A-2004/0084365 ist ein Verfahren bekannt, bei dem mikroporöse Polybenzimidazol-Hohlfadenmembranen in ihrem Innenraum mit einer Aminlösung gespült werden, die Aminlösung durch Schwerkraft aus den Hohlfadenmembranen abgelassen wird und anschließendes trockenes Stickstoffgas durch die Hohlfadenmembran geleitet wird. Anschließend wird eine Lösung mit Isophthaloylchlorid in Hexan durch die Hohlfadenmembran geleitet, so dass mittels Grenzflächenpolymerisation eine Polyamidbeschichtung an der Innenseite der Hohlfadenmembran erzeugt wird.

Es ist somit Aufgabe der vorliegenden Erfindung, ein Verfahren bereitzustellen, mit dem Hohlfadenmembranen im Inneren mittels der Methode der Phasengrenzflächen-Polymerisation zur Ausbildung einer trennaktiven Schicht hergestellt werden können, wobei das Verfahren einfach und sicher durchführbar sein soll.

Gelöst wird die Aufgabe gemäß der Erfindung durch ein Verfahren zur Herstellung von Hohlfadenmembranen mit innenliegender Trennschicht, wobei die Trennschicht nach der Methode der Phasengrenzflächen-Polymerisation erzeugt wird, wobei die Hohlfäden nach ihrer Erzeugung
a. in ihrem Innenraum mit einer Aminlösung gespült werden,
b. nachfolgend die Aminlösung durch ein gegenüber der Aminlösung inertes Mittel ersetzt wird,
c. und anschließend das inerte Mittel im Innenraum durch eine Säurechloridlösung verdrängt wird,
   dadurch gekennzeichnet, dass das inerte Mittel eine inerte Flüssigkeit ist.

Der wesentliche Vorteil der erfindungsgemäßen Lösung liegt darin, dass mittels der vorgeschlagenen Verfahrensführung die bei der Beschichtung der Innenflächen von Hohlfäden mittels des bekannten Verfahrens bisher auftretenden Tröpfchen, die aus dem Innenraum nicht entfernt werden können, überhaupt vermieden werden und ein weiterer Vorteil ist, dass gegenüber dem speziellen bekannten Verfahren erfindungsgemäß ein Austrocknen der Innenoberfläche der Membran vermieden wird.

Gemäß einer vorteilhaften Ausgestaltung des Verfahrens ist die inerte Flüssigkeit nicht wasserlösbar. Faktisch verdrängt die inerte Flüssigkeit die Aminlösung aus den Hohlfäden, so dass es nicht zu der sehr nachteiligen Tröpfchenbildung kommt. Dadurch verläuft die anschließende Phasengrenzflächen-Polymerisation fehlstellenfrei.

Die nicht wasserlösliche inerte Flüssigkeit ist vorzugsweise ein, insbesondere fluorierter, Kohlenwasserstoff.

Das Amin der Aminlösung kann in Abhängigkeit der angestrebten Trennaufgabe, in Abhängigkeit des die Hohlfäden bildenden Werkstoffs und in Abhängigkeit des mit der beschichteten Hohlfadenmembran durchführbaren Trennmechanismus, bspw. der Umkehrosmose oder der Nanofiltration, geeignet gewählt werden. So ist es bspw. vorteilhafterweise möglich, als Amin der Aminlösung Phenylendiamin zu verwenden.

Als Säurechlorid der Säurechloridlösung wird vorzugsweise Trimesoylchlorid verwendet.

Da die Hohlfäden selbst faktisch nur Träger für die eigentliche Membran, die an der Innenoberfläche der Hohlfäden ausgebildet wird, bilden, ist es vorteilhaft, die Hohlfäden derart auszubilden, dass sie selbst eine poröse Struktur aufweisen, d.h. an dem eigentlichen Stofftrennungsprozess, der mit den Hohlfadenmembranen ausgeführt werden soll, nicht teilnehmen.

Der die Hohlfäden bildende Werkstoff ist vorzugsweise ein Polymer, wobei als Polymere beliebige geeignete Polymere Verwendung finden können, und zwar in Abhängigkeit der beabsichtigten Stofftrennung mit den Hohlfadenmembranen, die eben auf das zu trennende Medium abgestimmt sein müssen. Das Polymer kann bspw. Polysulfon, Polyethersulfon, Polyphenylensulfon, Polyetherimid oder Polyacrylnitril sein, wobei diese Aufstellung der Polymere lediglich beispielhaft und nicht abschließend zu verstehen ist.

Anhand der nachfolgend beispielhaft aufgeführten vier Beispiele zur Ausbildung von Hohlfadenmembranen gemäß der Erfindung ist die Erfindung im Einzelnen erkennbar. Die mittels der Erfindung anhand der vier Beispiele aufgeführten Hohlfadenmembranen dienen der Wasserentsalzung.

Diese Beispiele sind

### Beispiel 1

Ein Stofftrennmodul enthält fünf Polyetherimidhohlfadenmembranen mit einem inneren Durchmesser von 0,64 mm, die mit einer dünnen Polyamidschicht beschichtet sind bzw. bei denen im Innenraum eine dünne Polyamidschicht durch grenzflächige Polymerisation ausgebildet ist. Zuerst wird eine wäßrige 1,3 % m-Phenylen-Diaminlösung in die Hohlräume geleitet. Nach 30, sec wird reines n-Hexan in den Innenraum eingebracht bzw. eingesaugt, wodurch die m-Phenylen-Diaminlösung verdrängt wird, wobei nachfolgend eine 0,08 %-ige Trimesoylchloridlösung in Hexan durch den Innenraum gepumpt wird. Die Trimesoylchloridlösung wird nach 6 sec entfernt, und zwar durch unter Druck befindlichem Stickstoff, der durch die Innenhohlräume der Hohlfäden 45 sec lang geleitet wird. Die Hohlfadenmembranen werden dann kurz in Methanol gespült, um die Reste des m-Phenylen-Diamins zu entfernen und werden dann in Wasser gespült.

### Beispiel 2

Die Hohlfadenmembranen, die gemäß Beispiel 1 hergestellt worden sind, werden in einem Umkehrosmoseverfahren bei 10 bar für die Entsalzung von 3000 ppm Kochsalzlösungen herangezogen. Das Rückhaltevermögen in bezug auf das Salz und die Flüsse sind in Tabelle 1 dargestellt.

**Tabelle 1**

| Modul Nr. | Salzrückhaltevermögen % | Fluß L·m²·h⁻¹·bar⁻¹ |
|---|---|---|
| 1 | 98,1 | 1,4 |
| 2 | 97,5 | 1,5 |
| 3 | 99,2 | 1,8 |
| 4 | 97,6 | 1,4 |
| 5 | 98,3 | 2,2 |
| 6 | 97,0 | 2,6 |

### Beispiel 3

Polyetherimidhohlfadenmembranen mit einem inneren Durchmesser von 0,74 mm werden mit einer dünnen Polyamidschicht an der Innenseite der Hohlfäden beschichtet. Die dünne Schicht wird durch kontinuierlichen Durchlauf einer reaktiven Flüssigkeit aus c-Hexan und Wasser gemäß folgenden Kriterien bzw. Parametern ausgebildet. Eine wäßrige Lösung von m-Phenylendiamin (5 Gew.%, 1,5 min), c-Hexan (rein), einer organischen Lösung von Trimesoylchlorid in c-Hexan (0,13 %, 2 min) und Wasser (rein, 2 min). Die Hohlfäden wurden dann getrocknet und ein zehn Hohlfadenmembranen umfassendes Modul 1 wurde hergestellt.
Die Hohlfadenmembranen wurden dann später mit 40 volumen%-igen Methanol in Wasser nochmals gewaschen, wodurch ihre Eignung für eine Stofftrennung nach dem Prinzip der Umkehrosmose bei 10 bar und einer 3000 ppm Kochsalzlösung untersucht bzw. bewertet wurde. Das Salzrückhaltevermögen und die Flüsse sind in Tabelle 2 dargestellt.

**Tabelle 2**

| Modul Nr. | Zeit c-Hexan s | Salzrückhaltevermögen % | Fluß L·m²·h⁻¹·bar⁻¹ |
|---|---|---|---|
| 7 | 0 | 10 | 2,6 |
| 8 | 10 | 99,2 | 0,57 |
| 9 | 20 | 99,1 | 0,58 |
| 10 | 30 | 99,0 | 0,57 |
| 11 | 60 | 99,4 | 0,53 |
| 12 | 90 | 98,4 | 0,58 |
| 13 | 120 | 98,3 | 0,11 |

### Beispiel 4

Polyetherimidhohlfadenmembranen mit einem inneren Durchmesser von 0,74 mm wurden in einem acht hohlfadenmembranen- umfassenden Modul zusammengefaßt. Die Herstellung dieser Hohlfadenmembranen unterscheidet sich von denen im Beispiel 3 in zwei Punkten. Die Lösungen wurden lediglich durch den Hohlraum der Hohlfäden gedrückt und dann im Hohlraum belassen und gleichzeitig wird c-Hexan eingeleitet und verbleibt dort 1 min lang. Die Module werden dann eine Nacht lang in Wasser gehalten, wobei dann ihr Geeignetsein für eine Stofftrennung bei einer 3000 ppm Kochsalzlösung bei 10 bar überprüft wurde. Das Salzrückhaltevermögen und die Flüsse sind in der Tabelle 3 ersichtlich.

**Tabelle 3**

| Modul Nr. | Salzrückhaltevermögen % | Fluß L·m²·h⁻¹·bar⁻¹ |
|---|---|---|
| 14 | 99,4 | 2,42 |
| 15 | 99,5 | 2,39 |
| 16 | 99,4 | 2,37 |
| 17 | 99,3 | 2,38 |
| 18 | 98,2 | 2,37 |
| 19 | 99,3 | 1,99 |
| 20 | 99,4 | 1,70 |

## Patentansprüche

1. Verfahren zur Herstellung von Hohlfadenmembranen mit innenliegender Trennschicht, wobei die Trennschicht nach der Methode der Phasengrenzflächen-Polymerisation erzeugt wird, wobei die Hohlfäden nach ihrer Erzeugung
a. in ihrem Innenraum mit einer Aminlösung gespült werden,
b. nachfolgend die Aminlösung durch eine gegenüber der Aminlösung inertes Mittel ersetzt wird,
c. und anschließend das inerte Mittel im Innenraum durch eine Säurechloridlösung verdrängt wird,
**dadurch gekennzeichnet, dass** das inerte Mittel eine inerte Flüssigkeit ist.

2. Verfahren nach Anspruch 1, **dadurch gekennzeichnet, dass** die inerte Flüssigkeit nicht wasserlösbar ist.

3. Verfahren nach Anspruch 2, **dadurch gekennzeichnet, dass** die nicht wasserlösbare inerte Flüssigkeit ein Kohlenwasserstoff ist.

4. Verfahren nach Anspruch 3, **dadurch gekennzeichnet, dass** die nicht wasserlösbare inerte Flüssigkeit ein fluorierter Kohlenwasserstoff ist.

5. Verfahren nach einem oder mehreren der Ansprüche 1 bis 4, **dadurch gekennzeichnet, dass** das Amin der Aminlösung Phenylendiamin ist.

6. Verfahren nach einem oder mehreren der Ansprüche 1 bis 5, **dadurch gekennzeichnet, dass** das Säurechlorid der Säurechloridlösung Trimesoylchlorid ist.

7. Verfahren nach einem oder mehreren der Ansprüche 1 bis 6, **dadurch gekennzeichnet, dass** die Hohlfäden selbst eine poröse Struktur aufweisen.

8. Verfahren nach einem oder mehreren der Ansprüche 1 bis 7, **dadurch gekennzeichnet, dass** der die Hohlfäden bildende Werkstoff ein Polymer ist.

9. Verfahren nach Anspruch 8, **dadurch gekennzeichnet, dass** das Polymer Polysulfon oder Polyethersulfon oder Polyphenylensulfon oder Polyetherimid oder Polyacrylnitril ist.

## Claims

1. A method of manufacturing hollow fibre membranes with an internal partition layer, wherein the partition layer is produced by the method of phase boundary surface polymerisation, wherein, after their production, the hollow fibres
a. are rinsed in their interior with an amine solution,
b. the amine solution is then replaced by an medium which is inert with respect to the amine solution,
c. and the inert medium in the interior is then displaced by an acyl chloride solution,
**characterised in that** the inert medium is an inert liquid.

2. A method as claimed in Claim 1, **characterised in that** the inert liquid is non-water soluble.

3. A method as claimed in Claim 2, **characterised in that** the non-water soluble, inert liquid is a hydrocarbon.

4. A method as claimed in Claim 3, **characterised in that** the non-water soluble, inert liquid is a fluorinated hydrocarbon.

5. A method as claimed in one or more of Claims 1 to 4, **characterised in that** the amine of the amine solution is phenylene diamine.

6. A method as claimed in one of claims 1 to 5, **characterised in that** the acyl chloride of the acyl chloride solution is trimesoyl chloride.

7. A method as claimed in one or more of claims 1 to 6, **characterised in that** the hollow fibres themselves have a porous structure.

8. A method as claimed in one or more of claims 1 to 7, **characterised in that** the material constituting the hollow fibres is a polymer.

9. A method claimed in claim 8, **characterised in that** the polymer is polysulphone or polyethersulphone or polyphenylenesulphone or polyetherimide or polyacrylonitrile.

## Revendications

1. Un procédé pour réaliser des membranes à fibres creuses à couche de séparation intérieure, la couche étant réalisée par polymérisation d'interfaces et les fibres creuses selon ce procédé
a. leur espace intérieur est nettoyé au moyen d'une solution aminée,
b. la solution aminée est ensuite remplacée par un agent inerte par rapport à la solution aminée,
c. et l'agent inerte est enfin supplanté dans l'espace intérieur des fibres par une solution de chlorure d'acide.
**caractérisé en ce que** l'agent inerte est un fluide inerte.

2. Le procédé selon la revendication 1, **caractérisé en ce que** le fluide inerte est insoluble dans l'eau.

3. Le procédé selon la revendication 2, **caractérisé en ce que** le fluide inerte insoluble dans l'eau est un hydrocarbure.

4. Le procédé selon la revendication 3, **caractérisé en ce que** le fluide inerte insoluble dans l'eau est un hydrocarbure fluoré.

5. Le procédé selon l'une ou plusieurs des revendications 1 à 4, **caractérisé en ce que** l'amine de la solution aminée est une phénylènediamine.

6. Le procédé selon l'une ou plusieurs des revendications 1 à 5, **caractérisé en ce que** le chlorure d'acide de la solution de chlorure d'acide est du chlorure de trimesoyle.

7. Le procédé selon l'une ou plusieurs des revendications 1 à 6, **caractérisé en ce que** les fibres creuses elles-mêmes ont une structure poreuse.

8. Le procédé selon l'une ou plusieurs des revendications 1 à 7, **caractérisé en ce que** le matériau formant les fibres creuses est un polymère.

9. Le procédé selon la revendication 8, **caractérisé en ce que** le polymère est un polysulfone ou un polyéther-sulfone ou un polyphénylène sulfone ou un polyéthérimide ou un polyacrylonitrile.
